# EUROPÄISCHE PATENTANMELDUNG

(11) **EP 4 632 336 A1**
(43) Veröffentlichungstag der Anmeldung: **15.10.2025**
(21) Anmeldenummer: 24169485.0
(22) Anmeldetag: 10.04.2024
(51) Int. Cl.: G01G 19/40, G01G 21/22

(54) **WAAGE ZUM WÄGEN EINER PROBE UNTER WECHSELWIRKUNG MIT MINDESTENS EINEM PROZESSGAS UND ZUGEHÖRIGER PROBEBEHÄLTER**

(71) Anmelder: Linseis Messgeräte GmbH, 95100 Selb (DE)
(72) Erfinder: Linseis, Vincent, 95028 Hof (DE); Linseis, Florian, 95100 Selb (DE); Gollner, Michael, 95691 Hohenberg (DE); Helling, Dominik, 95126 Schwarzenbach a.d. Saale (DE)
(74) Vertreter: Gramm, Lins & Partner Patent- und Rechtsanwälte PartGmbB

(57) **Zusammenfassung**

Die Erfindung betrifft eine Waage (2) zum Wägen einer Probe (4) unter Wechselwirkung mit mindestens einem Prozessgas (6), wobei die Waage (2) zumindest eine Probenaufnahme (8), die eingerichtet ist zum Aufnehmen einer Gewichtskraft eines Probenbehälters (10) mit der Probe (4), mindestens eine Prozessgasleitung (12), die ausgebildet ist zum Zuführen des Prozessgases (6) zur Probenaufnahme (8), und mindestens eine Messeinheit (14) zum Messen der Gewichtskraft oder einer Gewichtskraftänderung, die auf die Probenaufnahme (8) einwirkt, aufweist, wobei die Probenaufnahme (8) mindestens eine Austrittsöffnung (16) für das Prozessgas (6) hat, die angeordnet ist zum Leiten des Prozessgases (6) zu einem Probenbehälterboden (18).

## Beschreibung

Die Erfindung betrifft eine Waage zum Wägen einer Probe unter Wechselwirkung mit mindestens einem Prozessgas, wobei die Waage (a) zumindest eine Probenaufnahme, die eingerichtet ist zum Aufnehmen einer Gewichtskraft eines Probenbehälters mit der Probe, (b) mindestens eine Prozessgasleitung, die ausgebildet ist zum Zuführen des Prozessgases zur Probenaufnahme, und (c) mindestens eine Messeinheit zum Messen der Gewichtskraft oder einer Gewichtskraftänderung, die auf die Probenaufnahme einwirkt, aufweist. Zudem betrifft die Erfindung einen Probenbehälter der (a) einen Probenbehälterboden mit zumindest einer Gaseintrittsöffnung aufweist und der (b) ausgebildet ist zum Bilden einer gasstromdichten Verbindung mit einer Probenaufnahme.

Präzise Waagen zum Wägen einer Probe unter Wechselwirkung mit mindestens einem Prozessgas sind unter anderem in der Forschung, Entwicklung und Industrie erforderlich, beispielsweise zur Untersuchung von chemischen Reaktionen. Hierbei wird beispielsweise eine Probe während einer chemischen Reaktion mit dem Prozessgas wiederholt gewogen, um einen Zeitverlauf der Gewichtsänderung zu erfassen. Dies ermöglicht die Bestimmung der Reaktionsgeschwindigkeit.

In vielen Fällen hängt die jeweilige chemische Reaktion von der Temperatur ab oder es ist ein vorgegebener Temperaturbereich, beispielsweise zur Aktivierung der chemischen Reaktion, einzuhalten. Deshalb ist es wünschenswert, dass die Probe und/oder das Prozessgas temperierbar ist. Zudem ist es wünschenswert, dass eine Temperatur der Probe und/oder eine von der Probe abgegebene oder aufgenommene Wärmemenge erfasst werden kann, um beispielsweise eine temperaturabhängige Gewichtsänderung der Probe bestimmen und/oder eine Kalorimetrie durchzuführen zu können.

Es existieren Waagen zum Wägen einer Probe unter Wechselwirkung mit mindestens einem Prozessgas, bei denen das Prozessgas seitlich der Probe zugeführt wird, beispielsweise von einer Einströmseite in annähernd horizontaler Richtung. Das Prozessgas strömt bei diesen Waagen oberhalb der Probe entlang und wird auf einer horizontal zu der Einströmseite gegenüberliegenden Seite der Probe abgeleitet. Es hat sich gezeigt, dass die mit solchen Waagen ermittelten Reaktionsgeschwindigkeiten schlecht mit den Reaktionsgeschwindigkeiten in größeren Anlagen übereinstimmen.

Um dieses Problem zu lösen und präzise Gewichtsänderungen während der Wechselwirkung mit dem Prozessgas messen zu können, wird beispielsweise eine vollständige Reaktionskammer mit darin platzierter Probe während der Reaktion gewogen. Dadurch ergibt sich jedoch der Nachteil, dass ein hohes Gesamtgewicht gewogen werden muss, was eine relativ hohe absolute Messunsicherheit bedingt.

Es ist daher die Aufgabe der vorliegenden Erfindung, eine Waage bereitzustellen, die die Nachteile im Stand der Technik vermindert.

Die Aufgabe wird erfindungsgemäß durch eine gattungsgemäße Waage zum Wägen einer Probe unter Wechselwirkung mit mindestens einem Prozessgas gelöst, die sich auszeichnet dadurch, dass die Probenaufnahme zumindest eine Austrittsöffnungen für das Prozessgas hat, die angeordnet ist zum Leiten des Prozessgases zu einem Probenbehälterboden.

Dadurch ist vorteilhaft eine realistischere Messung der Reaktionsgeschwindigkeit von chemischen Reaktionen möglich, da die mit der Waage messbare Reaktionsgeschwindigkeit besser zu der Reaktionsgeschwindigkeit in einem realen Reaktor passt.

Zudem hat die Waage vorteilhaft meistens eine geringere Messunsicherheit, da die auf die Messeinheit wirkende Gewichtskraft geringer gewählt werden kann.

Unter der Probe wird im Rahmen der vorliegenden Beschreibung insbesondere ein zu untersuchendes Objekt verstanden, das mindestens einen Festkörper und/oder eine Flüssigkeit aufweist und das eine Gewichtskraft ausübt. Die Probe ist beispielsweise dazu geeignet, mit dem Prozessgas eine chemische Reaktion einzugehen. Die Probe ist beispielsweise ein Reinstoff oder ein Gemisch aus mindestens zwei Bestandteilen und beispielsweise dazu geeignet, dass die mindestens zwei Bestandteile eine chemische Reaktion miteinander eingehen, insbesondere unter Wechselwirkung mit dem Prozessgas.

Die Probe ist vorzugsweise in einem Probenbehälter angeordnet, der wiederum vorzugsweise auf der Probenaufnahme platziert ist. Dadurch wirkt die Gewichtskraft der Probe über den Probenbehälter auf die Probenaufnahme.

Die Waage weist mindestens eine Probenaufnahme auf. Die Probenaufnahme ist dazu eingerichtet, die Gewichtskraft der Probe aufzunehmen. Beispielsweise übt die Probe die Gewichtskraft auf die Probenaufnahme mittelbar über den Probenbehälter aus, in dem die Probe platziert ist. Die Probenaufnahme ist im Rahmen der vorliegenden Beschreibung insbesondere eine Probenbehälteraufnahme. Letzteres bedeutet, dass im Betrieb auf die Probenaufnahme die Gewichtskraft des Probenbehälters mit der Probe wirkt. Der Probenbehälter gehört nicht zu der Waage dazu. Die Kombination aus Waage und Probenbehälter wird als Wägesystem bezeichnet.

Ein Vorteil ist, dass der Probenbehälter und/oder die Probenaufnahme entnehmbar ist. Dadurch ist die Waage flexibel an verschiedene Proben anpassbar und leicht zu reinigen und zu warten.

Beispielsweise steht der Probenbehälter auf der Probenaufnahme. Die Probenaufnahme ist beispielsweise ein Probenteller oder ein Rohraufsatz, der auf die Prozessgasleitung aufsetzbar ist. Der Probenbehälter ist beispielsweise ein Tiegel. Der Probenbehälter hat einen Probenbehälterboden. Der Probenbehälterboden ist der Probenaufnahme zugewandt und berührt in der Regel die Probenaufnahme, wenn der Probenbehälter auf der Probenaufnahme steht.

Die Probenaufnahme hat beispielsweise eine im Querschnitt runde, insbesondere kreisförmige, Bodenfläche, auf der die Probenaufnahme steht. Alternativ sind andere Bodenflächenformen möglich, beispielsweise viereckig.

Unter dem Prozessgas wird insbesondere ein Gas verstanden, das mindestens eine bestimmte erwünschte chemische Reaktion der Probe einleitet, fördert oder eine bestimmte unerwünschte chemische Reaktion der Probe hemmt oder verhindert.

Beispiele für Prozessgase sind Luft, Wasserstoff, Ethen, Ethin, Kohlenmonoxid, Sauerstoff, Ozon, Stickstoff, Helium Argon, Xenon, Neon, Krypton, Kohlendioxid, oder Mischungen davon sowie andere Gase. Das Prozessgas dient beispielsweise dazu, eine Oxidation, insbesondere Verbrennung, Reduktion oder eine andere chemische Reaktion zu fördern oder zu hemmen, sodass die Gewichtsänderung während der chemischen Reaktion messbar ist.

Unter Waage wird eine Vorrichtung zum Messen einer Gewichtskraft, Gewichtskraftänderung, Masse oder Masseänderung verstanden. Im Rahmen dieser Beschreibung wird mit dem Messen von einer Gewichtskraft auch das Messen einer Gewichtskraftänderung mitgemeint und umgekehrt.

Die Waage weist mindestens eine Messeinheit auf, die insbesondere dazu eingerichtet ist, die Gewichtskraft oder Gewichtskraftänderung der Probe zu erfassen, vorzugsweise mittelbar durch Messen der Gewichtskraft oder Gewichtskraftänderung der Probenaufnahme. Die Messeinheit weist beispielsweise mindestens einen elektrischen, elektromagnetischen und/oder optischen Sensor auf.

Beispielsweise ist die Messeinheit ausgebildet zum Halten der Probeaufnahme an einer Position durch Bestromen eines Elektromagneten, der mit einem zweiten Magneten zusammenwirkt, sowie zum Bestimmen der Gewichtskraft aus dem dazu notwendigen elektrischen Kompensationsstrom.

Die Waage weist mindestens eine Prozessgasleitung auf, die ausgebildet ist zum Zuführen des Prozessgases zur Probenaufnahme. Die Prozessgasleitung führt mit anderen Worten das Prozessgas zu der Probenaufnahme, vorzugsweise zu einem Boden der Probenaufnahme.

Die Probenaufnahme hat mindestens eine Austrittsöffnung für das Prozessgas, sodass das Prozessgas zu einem Probenbehälterboden geleitet wird, wenn der Probenbehälter auf der Probenaufnahme steht. Das Prozessgas wird mit anderen Worten aus der Prozessgasleitung durch die Austrittsöffnung in der Probenaufnahme zum Probenbehälterboden geleitet.

Die Anzahl der Austrittsöffnungen an einer Oberseite der Probenaufnahme, die dem Probenbehälter bzw. der Probe zugewandt ist, beträgt vorzugsweise mindestens zwei, vorzugsweise mindestens vier, vorzugsweise mindestens sieben, vorzugsweise mindestens zehn.

Vorzugsweise sind die Austrittsöffnungen gleichmäßig über die Oberfläche der Probenaufnahme verteilt, zumindest über einen Teil der Oberfläche, insbesondere einer Kreisoberfläche, der dazu eingerichtet ist, dass darauf der Probenbehälter platziert wird. Gleichmäßig bezeichnet insbesondere, dass für die Mehrheit der Mittelpunkt der Öffnungen gilt, dass der Abstand zu den direkt benachbarten Öffnungen sich höchstens um 30% von einem mittleren Abstand benachbarter Öffnungen unterscheidet.

Die Austrittsöffnungen haben eine jeweilige Öffnungsoberfläche pro einzelner Austrittsöffnung von vorzugsweise mindestens 0,001 mm², vorzugsweise mindestens 0,01 mm², vorzugsweise maximal 5 mm², vorzugsweise maximal 2,5 mm², vorzugsweise maximal 1,5 mm².

Die Prozessgasleitung ist vorzugsweise mit der Probenaufnahme, vorzugsweise mit dem Boden der Probenaufnahme, verbunden, vorzugsweise so, dass das gesamte aus der Prozessgasleitung ausströmendes Prozessgas in die Austrittsöffnungen strömt. Insbesondere strömt vorzugsweise kein Prozessgas an der Probenaufnahme vorbei. Die Prozessgasleitung ist beispielsweise, zumindest abschnittsweise, ein Schlauch oder Rohr, beispielsweise mit einem Innendurchmesser von maximal 2 cm, vorzugsweise maximal 1 cm, beispielsweise minimal 0,5 mm, vorzugsweise minimal 1 mm.

Vorzugsweise ist die Probe mit dem Prozessgas durchströmbar. Dies bedeutet, dass das Prozessgas durch die Probe hindurchströmt, insbesondere, dass mindestens 60%, insbesondere zumindest 70%, bevorzugt zumindest 80% der Probenoberfläche entlang eines Querschnitts der Probe orthogonal zur Gasflussrichtung mit dem Prozessgas in Berührung kommt.

Vorzugsweise sind die Austrittsöffnungen so ausgebildet, dass die Probe mit dem Prozessgas nicht überströmt wird. In anderen Worten verläuft der Prozessgasstrom nicht horizontal, wobei eine Winkelabweichung von ±20°, insbesondere ±15°, insbesondere ±10° tolerabel ist. Dadurch ist eine chemische Reaktion der Probe mit dem Prozessgas verlässlicher und präziser untersuchbar und die Messfehler der Waage sind geringer als bei konventionellen Waagen mit Überströmung der Probe mit dem Prozessgas.

Vorzugsweise weist die Waage einen Wägebalken auf, der in einem Wägebalken-Drehpunkt gelagert ist. Vorzugsweise ist die Probenaufnahme mittels des Wägebalkens mit der Messeinheit verbunden, sodass mittels der Messeinheit eine Gewichtsveränderung der Probe messbar ist.

Dadurch hat die Waage vorteilhaft eine niedrige relative Messunsicherheit, da die relative Messunsicherheit von Wägebalken beispielsweise mittels einer Erhöhung der Balkenlänge gesenkt werden kann. Ferner sind Wägebalken vorteilhaft vergleichsweise leicht und mit hoher Präzision austarierbar.

Vorzugsweise weist die Waage eine Austariereinheit zum Austarieren einer auf die Probenaufnahme wirkenden Gewichtskraft auf.

Unter Austarieren wird insbesondere verstanden, dass die auf die Messeinheit wirkende Gewichtskraft nach dem Austarieren kleiner ist als davor. Vorzugsweise wirkt auf die Messeinheit eine Restgewichtskraft von höchstens 15% der unkompensierten Gewichtskraft, vorzugsweise maximal 10%, vorzugsweise maximal 5 %, oder ein absolutes Restgewicht der Gewichtskraft von maximal 15 g, vorzugsweise maximal 5 g, insbesondere maximal 1 g.

Unter Wägebalken wird im Rahmen der vorliegenden Beschreibung insbesondere ein waagerechter Balken verstanden. Der Wägebalken ist insbesondere beweglich an dem Drehpunkt gelagert, sodass sich auf beiden Seiten des Drehpunkts jeweils ein Balkenabschnitt befindet. Der Wägebalken ist insbesondere dazu eingerichtet, dass auf einen ersten Balkenabschnitt die Gewichtskraft der Probe einwirkt, sodass der erste Balkenabschnitt nach unten verschoben wird und dass an dem zweiten Balkenabschnitt die Messeinheit angeordnet ist.

Der zweite Balkenabschnitt hat ein Eigengewicht und weist vorzugsweise oder ein Zusatzgegengewicht auf. Vorzugsweise ist die Austariereinheit an dem zweiten Balkenabschnitt angeordnet und/oder mit diesem, zumindest mittelbar, verbunden. Die Austariereinheit ist insbesondere dazu eingerichtet, die auf den Wägebalken, insbesondere auf den ersten Balkenabschnitt, einwirkende Gewichtskraft zu auszutarieren bzw. zu kompensieren. Daraus ergibt sich der Vorteil, dass eine Gewichtskraftänderung der Probe und/oder der Probenaufnahme leichter präzise, schnell und/oder über einen breiten Temperaturbereich unabhängig von der Temperatur möglich ist.

Vorzugsweise weist die Austariereinheit mindestens einen Magneten, insbesondere einen Dauermagneten, und mindestens eine elektromagnetische Spule auf. Vorzugsweise ist die Austariereinheit dazu eingerichtet, in Abhängigkeit von der auf den Wägebalken, insbesondere auf den ersten Balkenabschnitt, einwirkenden Gewichtskraft und daraus resultierenden Auslenkung des Wägebalkens einen elektrischen Kompensationsstrom in die elektromagnetische Spule einzuspeisen, sodass der Magnet, insbesondere der Dauermagnet, durch die magnetische Wechselwirkung mit der Spule so bewegt wird, dass die Auslenkung verringert wird.

Vorzugsweise weist die Austariereinheit einen, insbesondere optischen, Sensor auf, der dazu eingerichtet ist, eine Winkelposition und/oder Winkelpositionsänderung des Wägebalkens zu erfassen, sodass eine Auslenkung aufgrund einer Gewichtsänderung der Probe erfassbar ist. Die erfasste Auslenkung wird von dem Sensor an eine Steuerung weitergegeben, die dazu eingerichtet ist, dass sie aus der erfassten Auslenkung eine elektrische Stromstärke bestimmt, die zum Austarieren bzw. Kompensieren der Auslenkung in die Spule einzuspeisen ist. Aus der Änderung der elektrischen Stromstärke berechnet die Steuerung die Gewichtsänderung der Probe.

Vorzugsweise weist die Austariereinheit eine Stromquelle auf, die dazu eingerichtet ist, den elektrischen Kompensationsstrom mit der bestimmten Stromstärke in die elektromagnetische Spule einzuspeisen, sodass die Auslenkung kompensiert wird. Beispielsweise ist die Stromquelle eine Batterie und/oder ein Akkumulator und/oder ein Netzteil.

Vorzugsweise ist die absolute Messunsicherheit der Gewichtskraft und/oder Gewichtskraftänderung der Probe maximal 10 mg, insbesondere höchstens 1 mg, insbesondere höchstens 200 µg, vorzugsweise höchstens 100 µg, vorzugsweise höchstens 10 µg.

Es ist jedoch nicht notwendig, dass die Waage einen Wägebalken aufweist. Alternativ kann die Waage beispielsweise eine Wägeplattform besitzen.

Vorzugsweise hat die Prozessgasleitung einen ersten Leitungsabschnitt, der von dem Wägebalken-Drehpunkt des Wägebalkens zur Probenaufnahme verläuft und in dem die Prozessgasleitung zumindest abschnittsweise entlang des Wägebalkens verläuft. Das Einkoppeln des Gases m Drehpunkt bewirkt eine geringe Beeinflussung des Wägesignals als wenn der Schlauch direkt an der Probenaufnahme angeschlossen werden würde.

Unter "entlang" wird im Rahmen der vorliegenden Beschreibung insbesondere ein Verlauf in die gleiche Richtung bei geringem Abstand, insbesondere ein paralleler Verlauf mit einer maximalen Winkelabweichung von vorzugsweise höchstens 5° und/oder einem Abstand von höchstens 3 cm, insbesondere höchstens 1 cm.

Beispielsweise ist der erste Leitungsabschnitt von dem Wägebalken-Drehpunkt des Wägebalkens zur Probenaufnahme zumindest abschnittsweise mit dem Wägebalken verbunden oder verläuft in oder am Wägebalken. Dadurch wird der Einfluss einer Prozessgasflussänderung in der Prozessgasleitung auf die Auslenkung des Wägebalkens weiter verringert.

Vorzugsweise hat die Prozessgasleitung einen zweiten Leitungsabschnitt, der von dem Wägebalken-Drehpunkt weg verläuft und in dem die Prozessgasleitung nicht mit dem Wägebalken verbunden ist. Mit anderen Worten ist der zweite Leitungsabschnitt von dem Wägebalken beabstandet und ist mit dem Wägebalken an der Stelle verbunden, an der der zweite Leitungsabschnitt in den ersten Leitungsabschnitt übergeht, vorzugsweise im Bereich des Wägebalken-Drehpunkts. Unter dem Bereich ist insbesondere ein Radius von höchstens 4 cm, insbesondere höchstens 2 cm, um den Drehpunkt herum zu verstehen. Dadurch wird vorteilhaft ein Einfluss der Prozessgasleitung und/oder eines Prozessgasflusses auf die von der Messeinheit der Waage erfasste Gewichtskraft und/oder Gewichtskraftänderung verringert.

Vorzugsweise ist der zweite Leitungsabschnitt mit dem Wägebalken an dem Wägebalken-Drehpunkt lösbar verbunden, beispielsweise mittels mindestens einer Lasche, einem Knopf, einer Schraube, einem Steckbolzen, einer Nut, einer Klettverbindung oder anderen lösbaren mechanischen Verbindungen. Dadurch ist vorteilhaft ein einfacher Wechsel der Prozessgasleitung und/oder des Wägebalkens oder Teilen davon möglich.

Vorzugsweise ist der Verbindungspunkt zwischen dem ersten und zweiten Leitungsabschnitt so in dem Bereich des Drehpunkts des Wägebalkens angeordnet, dass eine Prozessgasflussänderung durch den ersten und/oder zweiten Leitungsabschnitt die auf die Messeinheit wirkende Gewichtskraft zumindest im Wesentlichen unverändert lässt. Hierunter wird insbesondere verstanden, dass eine Durchflusserhöhung durch die Prozessgasleitung von 0 auf 0,1 Liter pro Minute eine Gewichtskraftänderung von maximal 5 Milligramm, insbesondere maximal 2 Milligramm, bewirkt.

Beispielsweise ist der zweite Leitungsabschnitt zumindest abschnittsweise (mittelbar oder unmittelbar) mit einer Aufhängung des Wägebalkens verbunden oder in oder an ihm ausgebildet. Dadurch ist vorteilhaft wenig zusätzliches Gewicht der Waage zur Lagerung bzw. Befestigung der Prozessgasleitung erforderlich. Dadurch erhöht sich die absolute Messgenauigkeit der Waage.

Unter Aufhängung wird insbesondere eine Lagerung des Wägebalkens im Drehpunkt verstanden, die den Wägebalken-Drehpunkt an einer festen Position hält. Vorzugsweise ist die Aufhängung dazu eingerichtet, eine Verschiebung und/oder ein Herabfallen des Wägebalken-Drehpunkts zu verhindern. Die Aufhängung weist beispielsweise mindestens ein Spannband auf, das den Wägebalken-Drehpunkt mit einem Referenzpunkt verbindet, der sich beispielsweise auf einem Fundament der Waage und/oder an einem Gehäuseboden der Waage befindet.

Vorzugsweise ist der zweite Leitungsabschnitt mit dem ersten Leitungsabschnitt so verbunden, dass die Prozessgasleitung spannungsfrei mit dem Wägebalken verbunden ist, beispielsweise mit einer Schleifenform in dem zweiten Leitungsabschnitt in dem Bereich, bevor der zweite Leitungsabschnitt in den ersten Leitungsabschnitt übergeht. Die Angabe "bevor" bezieht sich auf die Gasflussrichtung in der Prozessgasleitung, sodass bevor bedeutet, entgegen der Gasflussrichtung. Dadurch ist vorteilhaft die auf den Wägebalken wirkende Gewichtskraft unabhängig von einem Prozessgasfluss in der Prozessgasleitung. Mit anderen Worten führt vorzugsweise ein veränderlicher Prozessgasfluss in der Prozessgasleitung nicht zu einer Gewichtskraftänderung, die auf den Wägebalken wirkt.

Vorzugsweise ist die Prozessgasleitung im ersten Leitungsabschnitt zumindest abschnittsweise mit dem Wägebalken verbunden oder in oder an ihm ausgebildet. Dadurch wird vorteilhaft ein Einfluss der Prozessgasleitung und/oder eines Prozessgasflusses auf die von der Messeinheit der Waage erfasste Gewichtskraft und/oder Gewichtskraftänderung verringert. Zudem wird vorteilhaft erreicht, dass die Prozessgasleitung weniger vibriert, was eine geringere Messunsicherheit bewirkt.

Vorzugsweise verläuft die Prozessgasleitung im Bereich des Wägebalken-Drehpunkts zumindest abschnittsweise in axialer Richtung vom Wägebalken weg. Die axiale Richtung bedeutet insbesondere die Richtung entlang der Drehachse, um die der Wägebalken im Wägebalken-Drehpunkt drehbar ist. Beispielsweise ist der Wägebalken im kraftkompensierten Zustand waagerecht gelagert und die Achse, um die der Wägebalken im Wägebalken-Drehpunkt drehbar ist, verläuft orthogonal zu dem Wägebalken und zu der Erdbeschleunigung.

Daraus ergibt sich der Vorteil, dass die auf den Wägebalken wirkende Gewichtskraft unabhängig von einem Prozessgasfluss in der Prozessgasleitung ist. Mit anderen Worten führt vorzugsweise ein veränderlicher Prozessgasfluss in der Prozessgasleitung nicht zu einer Gewichtskraftänderung, die auf den Wägebalken wirkt.

Gemäß einer Ausführungsform hängt die Probenaufnahme an der Prozessgasleitung. In anderen Worten nimmt die Prozessgasleitung die Gewichtskraft der Probenaufnahme auf. Vorteilhaft daran ist, dass eine etwaige thermische Ausdehnung des Probenbehälters und/oder der Probenaufnahme kaum zu zusätzlicher Messunsicherheit führt.

Die Prozessgasleitung ist in diesem Fall vorzugsweise aus Glas, Keramik oder Metall aufgebaut.

Vorzugsweise weist die Waage einen Druckbehälter auf, der zumindest die Probenaufnahme umgibt, sodass der Probenbehälter unter einen vom Umgebungsdruck abweichenden Prozessdruck bringbar ist. Dadurch sind vorteilhaft eine Gewichtskraft und/oder Gewichtskraftänderung in Abhängigkeit von dem Prozessdruck und/oder solche chemischen Reaktionen untersuchbar, die nur bei einem vorgegebenen Prozessdruck ablaufen. Es ist möglich, dass der Druckbehälter alle in Anspruch 1 genannten Bestandteile der Waage umgibt.

Der Druckbehälter ist vorzugsweise eingerichtet zum Einstellen eines Überdrucks und/oder Unterdrucks im Bereich der Probe und/oder des Probenbehälters. Der Druckbehälter ist vorzugsweise eingerichtet zum Einstellen eines Prozessdrucks innerhalb eines Druckbereichs, dessen Obergrenze vorzugsweise mindestens 10 bar, vorzugsweise mindestens 50 bar beträgt. Der Druckbehälter ist vorzugsweise eingerichtet zum Einstellen eines Prozessdrucks innerhalb eines Druckbereichs, dessen Untergrenze vorzugsweise maximal 10⁻¹ bar, vorzugsweise maximal 10⁻³ bar, vorzugsweise maximal 10⁻⁴ bar, besonders bevorzugt maximal 10⁻⁵ bar.

Vorzugsweise weist die Waage mindestens ein Heizelement zum Erhitzen der Probe auf. Dadurch sind vorteilhaft die Gewichtskraft und/oder Gewichtskraftänderung in Abhängigkeit von einer Temperatur der Probe und/oder solche chemischen Reaktionen untersuchbar, die nur bei einer vorgegebenen Temperatur und/oder Temperaturbereich ablaufen. Viele chemische Reaktionen benötigen eine Aktivierungsenergie beispielsweise in Form von Wärme, damit die Reaktion startet.

Vorzugsweise weist die Waage mindestens eine Gas-Temperiervorrichtung zum Temperieren des Prozessgases an der Austrittsöffnungen auf eine vorgegebene Temperatur auf. Das Heizelement und/oder die Gas-Temperiervorrichtung sind vorzugsweise zum Einstellen einer Temperatur in einem Bereich geeignet, dessen Untergrenze vorzugsweise maximal 50°C beträgt und/oder dessen Obergrenze vorzugsweise mindestens 250°C, vorzugsweise mindestens 700°C, vorzugsweise mindestens 1000°C beträgt.

Dadurch ist es vorteilhaft möglich, die Prozessgastemperatur an der Austrittsöffnung auf eine erwünschte Temperatur zu bringen, die beispielsweise mindestens so hoch ist wie die Probentemperatur. Ferner ist es dadurch vorteilhaft möglich, eine bei vielen chemischen Reaktionen erforderliche Aktivierungsenergie in Form von Wärme über die Prozessgastemperatur, die beispielsweise höher als die Probentemperatur ist, zuzuführen. Vorzugsweise ist es dadurch vorteilhaft möglich, eine Schmelztemperatur und/oder Siedetemperatur der Probe und/oder eines Bestandteils der Probe zu erreichen und vorzugsweise zu bestimmen. Dadurch ist vorteilhaft eine Kontrolle einer chemischen Reaktion der Probe möglich, insbesondere wird dadurch die Reproduzierbarkeit der chemischen Reaktion verbessert, da der Ablauf von chemischen Reaktionen in der Regel von der Temperatur der Probe und/oder des Prozessgases abhängt und somit eine präzise Kontrolle über die Temperatur der Probe und/oder des Prozessgases wünschenswert ist.

Vorzugsweise weist die Waage mindestens einen Temperatursensor zum Erfassen einer Temperatur der Probe und/oder des Prozessgases auf. Dadurch ist es vorteilhaft möglich, die Gewichtskraft und/oder Gewichtskraftänderung in Abhängigkeit von einer Temperatur der Probe, insbesondere von der Temperatur der Probe und der Zeit während einer chemischen Reaktion, zu erfassen. Daraus ist es beispielsweise möglich, eine thermogravimetrische Analyse und/oder eine Thermoanalyse der Probe zu erstellen. Der Temperatursensor ist beispielsweise zum Erfassen von Temperaturen in einem Temperaturbereich mit einer Obergrenze von mindestens 1500°C, vorzugsweise mindestens 2500°C, vorzugsweise mindestens 2850°C ausgebildet.

Vorzugsweise weist die Waage ein Kalorimeter zum Erfassen der Wärmemenge bei der Wechselwirkung der Probe mit dem Prozessgas auf. Dadurch ist vorteilhaft möglich, eine Kalorimetrie, beispielsweise eine dynamische Differenzkalorimetrie, durchzuführen. Bei einer Kalorimetrie wird die Wärmeenergie erfasst, die von der Probe aufgenommen und/oder abgegeben wird. Bei einer dynamischen Differenzkalorimetrie wird die Wärmemenge erfasst, die während einer Temperaturänderung an der Probe aufgenommen oder abgegeben wird. Dadurch ist es vorteilhaft möglich, beispielsweise mindestens einen Phasenübergang, beispielsweise einen Schmelzpunkt, der Probe und/oder eines Bestandteils der Probe zu bestimmen.

Wenn die Waage sowohl einen Temperatursensor als auch ein Kalorimeter aufweist, ist mit der Waage vorteilhaft eine simultane thermische Analyse möglich, bei der gleichzeitig eine thermogravimetrische Analyse und eine Kalorimetrie, insbesondere eine dynamische Differenzkalorimetrie, durchgeführt wird. Beide Probenbehälter und beide Probenaufnahmen sind mit einer Prozessgasleitung verbunden und werden auf die gleiche Weise mit Prozessgas durchströmt.

Vorzugsweise weist die Waage eine Prozessgasfluss-Steuerung zum Steuern eines Prozessgasflusses auf. Die Prozessgasfluss-Steuerung ist mit anderen Worten dazu eingerichtet, den Prozessgasfluss durch die Prozessgasleitung zu steuern. Die Prozessgasfluss -Steuerung weist beispielsweise eine Steuerung und mindestens ein Ventil, beispielsweise in der Prozessgasleitung und/oder der Probenaufnahme auf, wobei die Steuerung vorzugsweise zum Steuern des Ventils eingerichtet ist. Vorzugsweise ist durch Öffnen bzw. Schließen des Ventils, vorzugsweise mit mindestens drei Zwischenstufen zwischen geöffnet und geschlossen, vorzugsweise mindestens acht, vorzugsweise kontinuierlicher Einstellung des Zwischenbereichs zwischen geöffnet und geschlossen, der Prozessgasfluss in der Prozessgasleitung und/oder durch die Austrittsöffnungen der Probenaufnahme steuerbar. Dadurch ist vorteilhaft eine Kontrolle der Prozessgaskonzentration an der Probe und/oder der Geschwindigkeit, mit der das Prozessgas die Probe durchströmt, möglich. Dies wiederum ermöglicht eine Kontrolle einer chemischen Reaktion der Probe, sofern das Prozessgas reaktionsfördernd, Reaktionspartner oder reaktionshemmend ist.

Vorzugsweise weist die Waage eine Steuerung auf, die ausgebildet ist zum automatischen Durchführen eines Verfahrens mit den Schritten (i) Erfassen eines Gewichts der Probe zu zumindest einem Zeitpunkt, (ii) Zuführen von Prozessgas gemäß einem gespeicherten Prozessgasfluss-Schema und (iii) Korrigieren des gemessenen Gewichts anhand einer gespeicherten Funktion, die zumindest einem Prozessgasfluss einen Gewichtskorrekturwert zuordnet. Dadurch wird vorteilhaft erreicht, dass ein Prozessgasfluss, beispielsweise in der Prozessgasleitung, keinen oder zumindest nur einen geringen Rückstoß und/oder andere Kraft auf die Waage bewirkt, was zu einer zusätzlichen Messunsicherheit führen würde.

Vorzugsweise ist die Steuerung dazu eingerichtet, den Gewichtskorrekturwert an die Austariereinheit weiterzugeben. Vorzugsweise ist die Austariereinheit dazu eingerichtet, entsprechend dem empfangenen Gewichtskorrekturwert die auf die Messeinheit wirkenden Gewichtskraft zu kompensieren.

Vorzugsweise ist die Steuerung dazu eingerichtet, den Gewichtskorrekturwert abhängig von dem jeweiligen erfassten Prozessgasfluss mittels einer Formel und/oder aus einer vorgegebenen Wertetabelle zu bestimmen. Die vorgegebene Wertetabelle ist beispielsweise aus vorherigen Kalibrierversuchen bestimmbar.

Das Prozessgasfluss-Schema enthält insbesondere mindestens einen vorgegebenen Wert für den Prozessgasfluss, der beispielsweise in der Prozessgasleitung und/oder in den Austrittsöffnungen der Probenaufnahme herrscht. Das Prozessgasfluss-Schema enthält beispielsweise mehrere vorgegebene Werte für den Prozessgasfluss, wobei jeder Wert beispielsweise einem bestimmten Zeitpunkt oder Zeitbereich und/oder Temperatur oder Temperaturbereich und/oder Gewicht oder Gewichtsbereich der Probe zugeordnet ist.

Vorzugsweise ist die Steuerung dazu eingerichtet, den Schritt des Erfassens eines Gewichts der Probe zu mindestens zwei Zeitpunkten durchzuführen, vorzugsweise zu mindestens fünf, vorzugsweise mindestens zehn Zeitpunkten. Dadurch ist eine Zeitabhängigkeit des Gewichts oder der Gewichtsänderung der Probe bestimmbar.

Vorzugsweise weist die Waage eine Spülgasvorrichtung auf, die dazu eingerichtet ist, den Bereich um die Messeinheit zu spülen. Das Spülgas strömt beispielsweise an der Probenaufnahme vorbei. Das Spülgas ist beispielsweise ein Inertgas, insbesondere ein Edelgas oder Stickstoff. Die Spülgasvorrichtung weist beispielsweise eine Spülgasleitung auf, die dazu eingerichtet ist, das Spülgas zur Probenaufnahme zu leiten.

Verbunden mit bezeichnet, dass mindestens ein, vorzugsweise mindestens zwei, Stellen der Prozessgasleitung mit dem Wägebalken zumindest mittelbar mechanisch verbunden sind, sodass der Abstand zwischen der Prozessgasleitung und dem Wägebalken an dieser Stelle vorzugsweise um maximal 4 mm variieren kann, vorzugsweise um maximal 2 mm.

Vorzugsweise ist die Verbindung zwischen der Prozessgasleitung und der Probenaufnahme, gasstromdicht. Unter gasstromdicht wird insbesondere verstanden, dass ein Leckstrom, der durch die Prozessgasleitung zur Probenaufnahme strömt und der nicht in die Austrittsöffnung der Probeaufnahme strömt, maximal 5% beträgt, vorzugsweise maximal 2%, vorzugsweise maximal 1% beträgt, wenn ein Gas aus einem Überdruckbehälter mit einem Überdruck von mindestens 10 mbar oberhalb des Umgebungsdrucks, und vorzugsweise einem Überdruck von höchstens 5 bar, vorzugsweise höchstens 1 bar, vorzugsweise höchstens 100 mbar oberhalb des Umgebungsdrucks, durch die Austrittsöffnung der Probenaufnahme geleitet wird. Dieser Druck kann im Falle der Verwendung eines Über- oder Unterdruckbehälters von dem Umgebungsdruck außerhalb der Waage abweichen.

Die Erfindung betrifft ferner einen Probenbehälter, insbesondere Tiegel, der einen Probenbehälterboden mit zumindest einer Gaseintrittsöffnung aufweist. Vorzugsweise ist der Probenbehälter ausgebildet zum Bilden einer gasstromdichten Verbindung mit einer Probenaufnahme, wobei die Probenaufnahme vorzugsweise zumindest abschnittsweise eben ist.

Vorzugsweise weist der Probenbehälter mindestens zwei, vorzugsweise mindestens fünf, vorzugsweise mindestens zehn Gaseintrittsöffnungen auf. Die Gaseintrittsöffnungen sind vorzugsweise gleichmäßig über eine Oberfläche, vorzugsweise eine Kreisfläche, verteilt. Gleichmäßig bezeichnet insbesondere, dass für die Mehrheit der Mittelpunkt der Öffnungen gilt, dass der Abstand zu den direkt benachbarten Öffnungen sich höchstens um 30% von einem mittleren Abstand benachbarter Öffnungen unterscheidet. Dadurch wird vorteilhaft eine annähernd gleichmäßige Prozessgaskonzentration erreicht, die entlang des Querschnitts der Probe, der sich orthogonal zur Erdbeschleunigung und beispielsweise auf der halben Höhe der Probe befindet, um vorzugsweise maximal 20% variiert, vorzugsweise um maximal 10%. Dadurch wird vorteilhaft eine realistischere Reaktionsgeschwindigkeit messbar, die besser zu realen Reaktionsgeschwindigkeiten in großen Reaktoren passt als beispielsweise bei Waagen, bei denen die Probe nur mit dem Prozessgas überströmt und nur teilweise durchströmt wird.

Die mindestens eine Gaseintrittsöffnung des Probenbehälterbodens hat eine Öffnungsoberfläche von vorzugsweise mindestens 0,0005 mm², vorzugsweise mindestens 0,01 mm², vorzugsweise maximal 5 mm², vorzugsweise maximal 2,5 mm², vorzugsweise maximal 1,5 mm².

Unter zumindest abschnittsweise eben wird insbesondere verstanden, dass innerhalb eines Abschnitts, der vorzugsweise ausreichend groß für eine Verbindung mit dem Probenbehälter ist, eine mittlere quadratische Abweichung zu einer Ausgleichsebene durch den Abschnitt maximal 5 µm, vorzugsweise maximal 0,5 µm, beträgt.

Insbesondere weist die Probeaufnahme mindestens eine Austrittsöffnung auf, die dazu eingerichtet ist, dass Gas durch die Austrittsöffnung und den auf die Probenaufnahme platzierten Probenbehälter zu der Probe, die in dem Probenbehälter angeordnet ist, strömt.

Vorzugsweise ist die mindestens eine Gaseintrittsöffnung des Probenbehälters so ausgebildet, dass sie zumindest abschnittsweise mit mindestens einer Austrittsöffnung der Probenaufnahme deckungsgleich positionierbar ist.

Vorzugsweise ist der Probenbehälter so ausgebildet, dass er so auf der Probenaufnahme anordenbar oder mit dieser verbindbar ist, dass jede Gaseintrittsöffnung des Probenbehälters zumindest abschnittsweise mit einer der Austrittsöffnungen der Probenaufnahme deckungsgleich ist.

Vorzugsweise ist der Probenbehälter eingerichtet dazu, mit einer Probenaufnahme einer erfindungsgemäßen Waage gasstromdicht verbindbar zu sein. Unter gasstromdicht wird in diesem Zusammenhang insbesondere verstanden, dass ein Leckstrom, der in die Austrittsöffnung der Probenaufnahme strömt und der nicht in den Probenbehälter strömt, maximal 20% beträgt, vorzugsweise maximal 5%, vorzugsweise maximal 1% beträgt, wenn der Probenbehälter auf die Probenaufnahme gestellt wird und/oder mit der Probenaufnahme verbunden ist, und ein Gas aus einem Überdruckbehälter mit einem Überdruck von 10 mbar oberhalb des Umgebungsdrucks durch die Austrittsöffnung der Probenaufnahme geleitet wird.

Vorzugsweise besteht der Probenbehälterboden des Probenbehälters aus Metall, Keramik oder Glas, insbesondere Quarzglas. Dadurch ist der Probenbehälterboden vorteilhaft hitzebeständig und/oder druckbeständig und für das Wägen bei hohen Temperaturen und/oder Drücken geeignet.

Vorzugsweise hat der Probenbehälterboden des Probenbehälters eine Standfläche, mit der der Probenbehälter auf einer ebenen Fläche steht, wobei die Standfläche eine Ebenheitsabweichung von maximal 50 µm hat, vorzugsweise maximal 10 µm.

Vorzugsweise weist der Probenbehälter einen Deckel auf, der zumindest zwei Reaktionsgasauslassöffnungen zum Ausströmenlassen von Gas aus dem Probenbehälterinnenraum in eine radial auswärtige Richtung besitzt. Dadurch ergibt sich der Vorteil, dass ein ausströmendes Prozessgas aus den Reaktionsgasauslassöffnungen keinen oder nur einen geringen Impuls entlang der Erdbeschleunigung aufweist und somit weniger Gewichtskraftänderung auf die Probenaufnahme und damit auf die Messeinheit bewirkt.

Vorzugsweise sind die Reaktionsgasauslassöffnungen so angeordnet, dass ein ausströmendes Prozessgas aus den Reaktionsgasauslassöffnungen annähernd keinen Gesamtimpuls aufweist und somit annähernd keine Gewichtskraftänderung auf die Probenaufnahme und damit auf die Messeinheit bewirkt.

Es ist aber auch möglich, dass der Deckel oben eine Öffnung hat, sodass das Gas axial ausströmen kann. Alternativ kann der Deckel komplett weggelassen werden.

Vorzugsweise weist der Probenbehälterboden eine Siphonstruktur auf, die mit der Gaseintrittsöffnung verbunden ist und in einen Probenbehälter-Innenraum führt. Dadurch wird vorteilhaft ein Herausfallen der Probe oder von Teilen der Probe durch die Gaseintrittsöffnung des Probenbehälterbodens verhindert.

Unter Siphonstruktur wird insbesondere eine Röhre verstanden, die mindestens eine Krümmung mit einem Winkel zwischen einer Eingangsabschnitt vor der Krümmung und einem Ausgangsabschnitt nach der Krümmung mindestens 80° aufweist. Beispielsweise hat die Siphonstruktur eine S-Form, beispielsweise mit einem kreisbogenförmigen Abschnitt.

Die Erfindung betrifft ferner ein Wägesystem mit einer erfindungsgemäßen Waage und einem erfindungsgemäßen Probenbehälter, der einen Probenbehälterboden mit zumindest einer Gaseintrittsöffnung aufweist. Vorzugsweise sind die Probenaufnahme und der Probenbehälter so ausgebildet, dass der Probenbehälter in einer Kontaktposition auf der Probenaufnahme positionierbar ist, in der aus den Austrittsöffnungen austretendes Prozessgas durch die Gaseintrittsöffnung in den Probenbehälter einströmt, sodass eine im Probenbehälter enthaltene Probe vom Prozessgas durchströmt wird.

Unter Durchströmen wir verstanden, dass ein gesamtes aus dem mindestens einen Austrittsöffnung ausgeströmte Prozessgasvolumen des Prozessgases in Berührung mit der Probe kommt und dass vorzugsweise eine Querschnittsfläche der Probe orthogonal zur Gasflussrichtung und/oder zur Erdbeschleunigung zu mindestens 60%, vorzugsweise mindestens 80%, vorzugsweise mindestens 90% mit dem Prozessgas in Berührung kommt.

Dies hat den Vorteil, dass die Prozessgaskonzentration innerhalb der Probe annähernd gleich ist. Dadurch ist eine chemische Reaktion der Probe mit dem Prozessgas verlässlicher und präziser untersuchbar und die Messfehler der Waage sind geringer als bei konventionellen Waagen mit Überströmung der Probe mit dem Prozessgas. Vorzugsweise sind die Austrittsöffnungen so ausgebildet, dass die Prozessgaskonzentration innerhalb der Probe um maximal 20% variiert, insbesondere um maximal 12%, insbesondere um maximal 8%.

Im Folgenden wird die Erfindung anhand der beigefügten Figuren näher erläutert. Dabei zeigt
- Figur 1: eine erfindungsgemäße Waage mit Probenaufnahme und Prozessgasleitung,
- Figur 2: einen Ausschnitt der Waage gemäß Figur 1, auf deren Probenaufnahme ein erfindungsgemäßer Probenbehälter steht,
- Figur 3: ein erfindungsgemäßes Wägesystem mit einer erfindungsgemäßen Waage und Probenbehälter, wobei die Waage eine Steuerung und der Probenbehälter radiale Reaktionsgassauströmöffnungen hat,
- Figur 4: ein erfindungsgemäßes Wägesystem mit einer erfindungsgemäßen Waage und Probenbehälter, wobei die Waage eine Spülgasleitung haben kann,
- Figur 5: einen Teil einer erfindungsgemäßen Waage mit einem Wägebalken und mit einer Darstellung der Prozessgasleitung, die in einem ersten Leitungsabschnitt mit dem Wägebalken verbunden ist, und
- Figur 6: einen erfindungsgemäßen Probenbehälter mit Gaseintrittsöffnungen mit Siphonstruktur.
- Figur 7a: zeigt eine erfindungsgemäße Waage ohne Wägebalken gemäß einer zweiten Ausführungsform der Erfindung und
- Figur 7b: einen Ausschnitt aus einer erfindungsgemäßen Waage gemäß einer dritten Ausführungsform der Erfindung und
- Figur 8: einen Ausschnitt aus einer erfindungsgemäßen Waage gemäß einer vierten Ausführungsform der Erfindung und
- Figur 9: einen Ausschnitt aus einer erfindungsgemäßen Waage gemäß einer fünften Ausführungsform der Erfindung und.

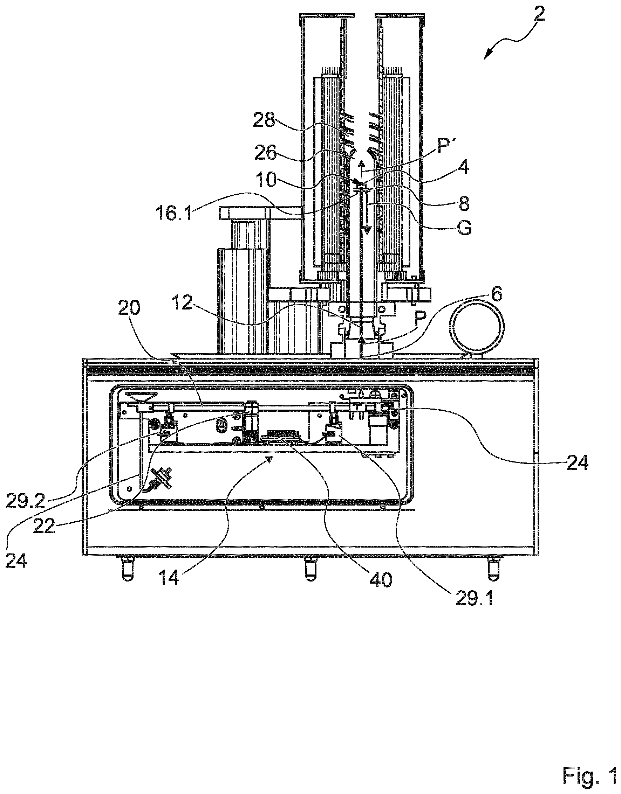

**Figur 1** zeigt eine erfindungsgemäße Waage 2. Die Waage 2 hat eine Probenaufnahme 8, die eingerichtet ist zum Aufnehmen einer Gewichtskraft G des Probenbehälters 10 mit einer Probe 4. Die Waage 2 hat ferner eine Prozessgasleitung 12, die ausgebildet ist zum Zuführen eines Prozessgases 6 zur Probenaufnahme 8. Der Pfeil P gibt die Prozessgasflussrichtung an. Der Pfeil P' symbolisiert Prozessgases 6, das die Probe 4 durchströmt hat und in die Umgebung austritt.

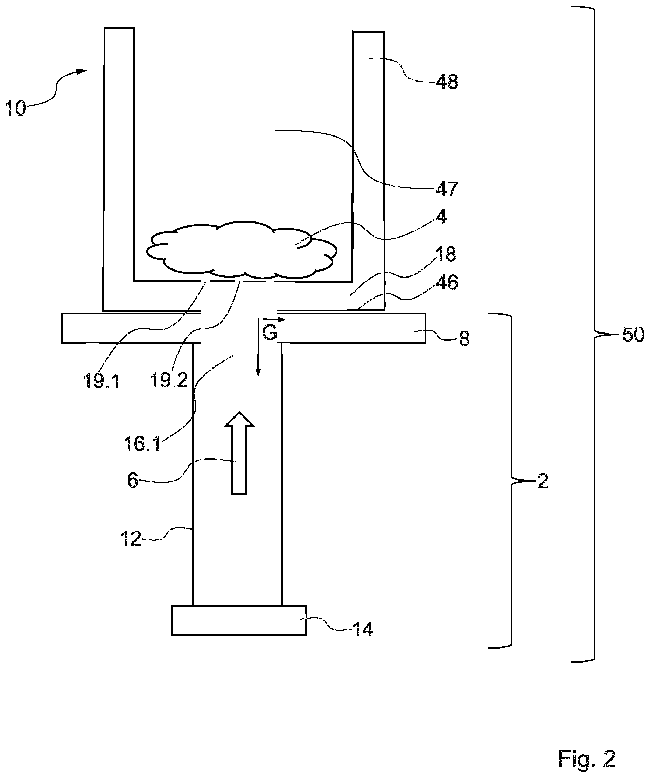

Die Waage 2 hat zudem eine Messeinheit 14, zum Messen der Gewichtskraft G, die auf die Probenaufnahme 8 einwirkt, oder einer Gewichtskraftänderung dG/dt. Insbesondere erfasst die Messeinheit 14, wenn sich das Gewicht G der Probe 4 im Probenbehälter 10 ändert. Die Probenaufnahme 8 hat eine Austrittöffnung 16 für das Prozessgas 6, sodass das Prozessgas 6 zu einem Probenbehälterboden 18 (siehe Figur 2) geleitet wird.

Die Waage besitzt einen Wägebalken 20, der in einem Wägebalken-Drehpunkt 22 gelagert ist. Die Probenaufnahme 8 ist mittels des Wägebalkens 20 mit der Messeinheit 14 verbunden, sodass mittels der Messeinheit 14 eine Gewichtskraft und/oder Gewichtskraftänderung der Probe 4 messbar ist. Mittels einer Austariereinheit 24 kann eine auf die Probenaufnahme 8 wirkende Gewichtskraft austariert werden. Die Austariereinheit 24 dient der Grobjustierung, den Wägebalken 20 vor der eigentlichen Messung zumindest annähernd ins Gleichgewicht zu bringen.

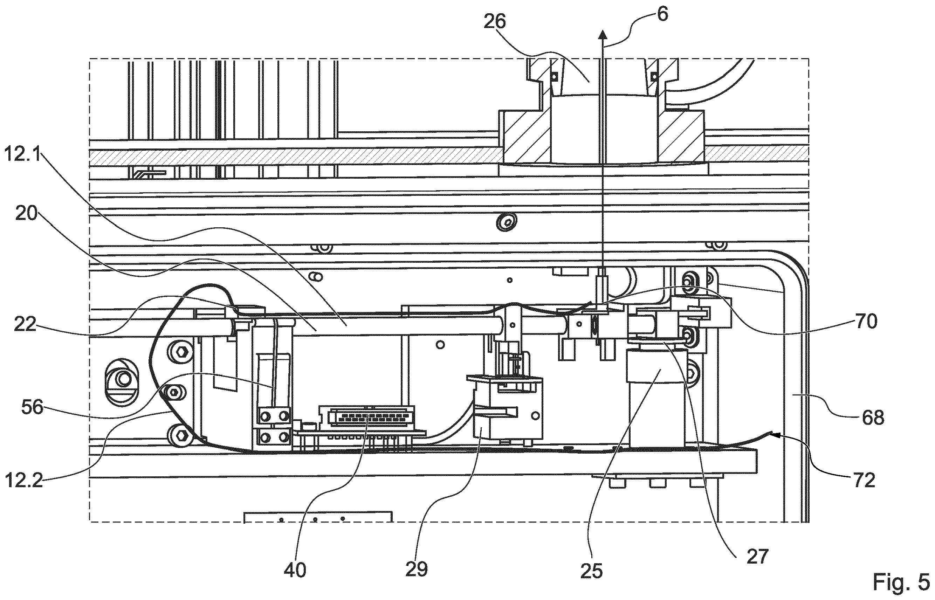

Die Messeinheit 14 besitzt beispielsweise einen Dauermagneten 25 (siehe Figur 5) und eine elektromagnetische Spule 27, durch die ein Kompensationsstrom Iₖ mit einer vorgegeben elektrischen Stromstärke einspeisbar ist. Das so erzeugte Magnetfeld erzeugt eine Kraft auf den Dauermagneten 25 und damit ein Drehmoment auf den Wägebalken 20.

Bei einer Auslenkung des Wägebalkens 20 vor Beginn einer Messung aufgrund einer Gewichtskraftänderung, beispielsweise durch Aufstellen des Probenbehälters 10 auf die Probenaufnahme 8, wird mittels zumindest eines Positionssensoren 29.1, beispielsweise optischen Sensoren, die Auslenkung erfasst und eine Steuerung 40 speist eine zur Kompensation erforderlichen elektrischer Kompensationsstrom Iₖ in die Spule ein. Der Kompensationsstrom könnte auch Austarierstrom genannt werden. Es kann beispielsweise ein zweiter Positionssensor 29.2 vorhanden sein

Der Kompensationsstrom Iₖ wird während der Messung so geändert, dass eine Winkelstellung des Wägebalkens 20 konstantbleibt. Auf diese Weise ist der Messbereich der Messeinheit 14 deutlich kleiner, was die Messunsicherheit verringert.

**Figur 2** zeigt einen Ausschnitt der Waage 2 und einen erfindungsgemäßen Probenbehälter 10. Der Probenbehälter 10 hat einen Probenbehälterboden 18 mit mehreren Gaseintrittsöffnungen 19.i. Der Probenbehälter 10 bildet zusammen mit der Waage 2 ein Wägesystem 50.

Der Probenbehälter 10 ist ausgebildet zum Bilden einer gasstromdichten Verbindung mit der Probenaufnahme 8. Die Probenaufnahme 8 ist dazu auf der Seite, die dem Probenbehälter 10 zugewandt ist, eben und der Probenbehälter 10 hat einen Probenbehälterboden 18 mit einer Standfläche 46, die eine Ebenheitsabweichung von maximal 50 µm, beispielsweise maximal 10 µm hat. So hat die Probenaufnahme 8 eine entsprechende geringe Ebenheitsabweichung.

Die Probenaufnahme 8 und der Probenbehälter 10 sind so ausgebildet, dass der Probenbehälter 10 in einer Kontaktposition auf der Probenaufnahme 10 positionierbar ist, in der aus der Austrittsöffnung 16 austretendes Prozessgas 6 durch die Gaseintrittsöffnungen 19.i in den Probenbehälter 10 einströmt, sodass die im Probenbehälter 10 enthaltene Probe 4 vom Prozessgas 6 durchströmt wird. Der Probenbehälterboden 18 ist beispielsweise aus Keramik oder Glas, beispielsweise Quarzglas.

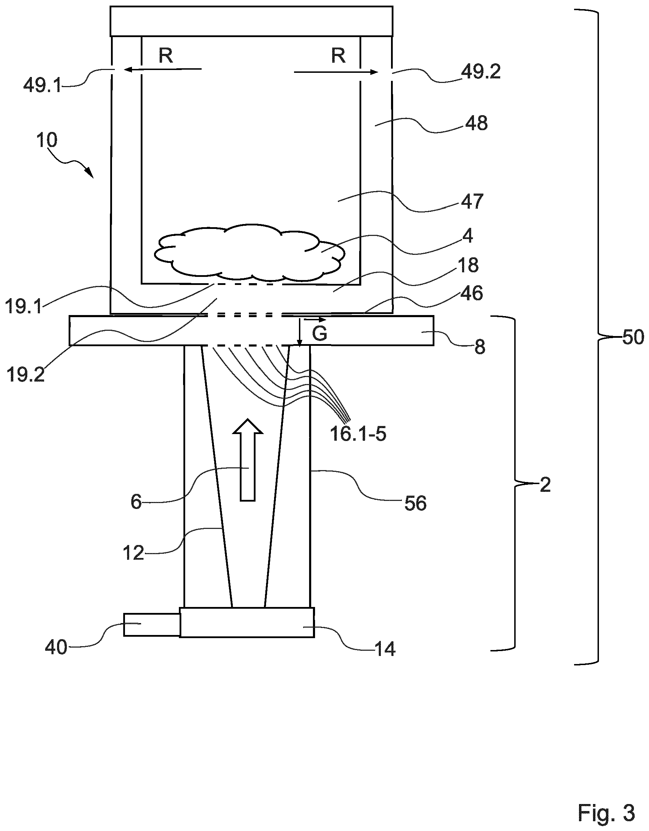

**Figur 3** zeigt, dass der Probenbehälter 10 einen Deckel 48 haben kann, der zwei Reaktionsgasauslassöffnungen 49.1, 49.2 zum Ausströmen lassen von Gas aus einem Probenbehälter-Innenraum 47 in radial auswärtige Richtung R besitzt. Dadurch wird eine durch das ausströmendes Gas 47 verursachte Gewichtskraftänderung verringert. Beispielsweise liegen die beiden Reaktionsgasauslassöffnungen 49.1, 49.2 einander gegenüber. Dieser Deckel ist aber nicht notwendig.

Es ist möglich, dass der Deckel 48 der Probenbehälters 10 mehr als zwei Reaktionsgasauslassöffnungen 49.1, 2 hat. Die Reaktionsgasauslassöffnungen 19.i so angeordnet, dass sich die Impulse durch das ausströmende Gas zumindest im Wesentlichen zu Null addieren.

Die Probenaufnahme 8 der Waage 2 hat in diesem Beispiel fünf Austrittsöffnungen 16.1, ..., 16.5 entlang des dargestellten Schnitts. Insgesamt hat die Probenaufnahme 8 in diesem Beispiel beispielsweise 18 bis 20 Austrittsöffnungen 16.i, die beispielsweise auf einer Kreisfläche annähernd gleichmäßig verteilt sind.

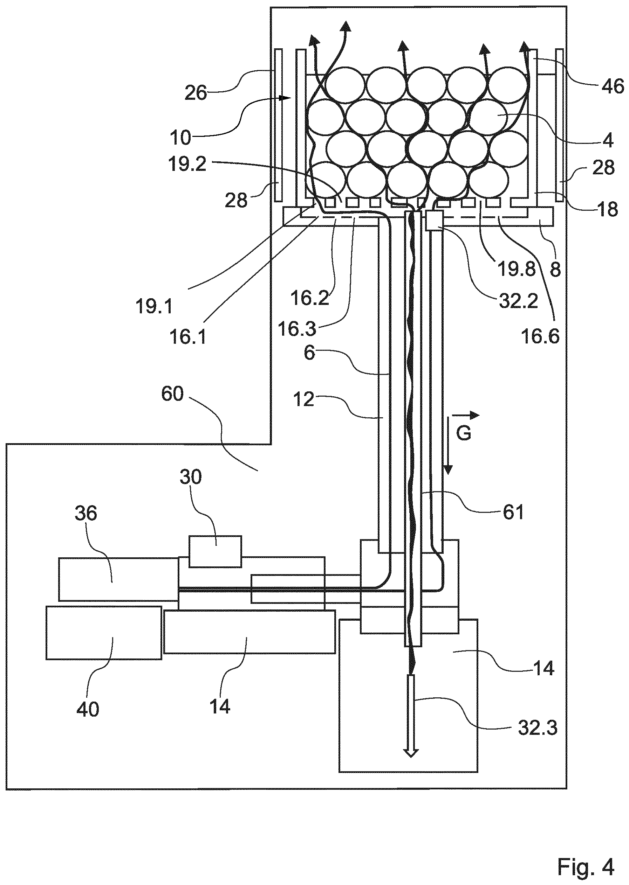

**Figur 4** zeigt eine Waage 2, in deren Probenaufnahme 8 eine Vielzahl an Austrittsöffnungen 16.i (i = 1, 2, ..., N) aufweist beispielsweise N = 55 bis 63 Austrittsöffnungen 16.i, die beispielsweise auf einer Kreisfläche annähernd gleichmäßig verteilt sind.

Die Waage 2 weist einen Druckbehälter 26 auf, der die Probenaufnahme 8 und die andren Komponenten der Waage 2 umgibt, sodass der Probenbehälter 10 unter einen vom Umgebungsdruck pu abweichenden Prozessdruck p_{P} bringbar ist.

Zudem hat die Waage 2 ein Heizelement 28 zum Erhitzen der Probe 4, eine Gas-Temperiervorrichtung 30 zum Temperieren des Prozessgases 6 an den Austrittsöffnungen 16 auf eine vorgegebene Temperatur und einen Temperatursensor 32 der ein Anschlusskabel 33 hat, zum Erfassen einer Temperatur der Probe 4 und des Prozessgases 6.

Mittels eines Kalorimeters kann die abgegebenen und/oder aufgenommenen Wärmemenge bei der Wechselwirkung der Probe 4 mit dem Prozessgas 6 erfasst werden. Beispielsweise ist umfasst das Kalorimeter einen zweiten Probenbehälter, in dem keine Reaktion stattfindet. In beiden Probenbehältern sind Temperaturmesser angebracht. Aus der Temperaturdifferenz zwischen den beiden Probenbehältern kann auf die Wärmeabgabe der Reaktion geschlossen werden.

Außerdem hat die Waage 2 eine Prozessgasfluss-Steuerung 36 zum Steuern des Prozessgasflusses. Beispielsweise ist die Prozessgasfluss-Steuerung 36 dazu eingerichtet, nach einem vorgegebene Prozessgasfluss-Schema mit vorgegebenen Prozessgasfluss-Werten den Prozessgasfluss zu steuern. Der gewünschte Prozessgasfluss ist beispielsweise über einen vorgegebene Zeitbereich konstant oder beträgt zeitabhängig verschiedene vorgegebene Werte für vorgegebene Zeitintervalle.

**Figur 5** zeigt einen Teil einer erfindungsgemäßen Waage 2 mit einem Wägebalken 20 und mit der Prozessgasleitung 12, die aus einem ersten Leitungsabschnitt 12.1 und einem zweiten Leitungsabschnitt 12.2 aufgebaut ist. Der erste Leitungsabschnitt 12.1 ist mit dem Wägebalken 20 verbunden, der in einem Wägebalken-Drehpunkt 22 gelagert ist. Die Probenaufnahme 8 ist mittels des Wägebalkens 20 mit der Messeinheit 14 verbunden.

Im ersten Leitungsabschnitt 12.1, der von dem Wägebalken-Drehpunkt 22 des Wägebalkens 20 zur Probenaufnahme 8 (siehe Figur 1) verläuft, verläuft die Prozessgasleitung 12 entlang des Wägebalkens 20. Der zweite Leitungsabschnitt 12.2 verläuft vom Wägebalken-Drehpunkt 22 weg und ist nicht mit dem Wägebalken 20 verbunden.

Der zweite Leitungsabschnitt 12.2 geht an dem Wägebalken-Drehpunkt 22 in den ersten Leitungsabschnitt 12.1 über. Der Übergang ist in diesem Bespiel über eine Schleife realisiert, sodass die Prozessgasleitung 12 spannungsfrei zu dem Wägebalken 20 geführt ist. Dadurch wird vorteilhaft keine Gewichtskraftänderung auf die Messeinheit 14 bewirkt, wenn sich ein Prozessgasfluss in der Prozessgasleitung 12 ändert.

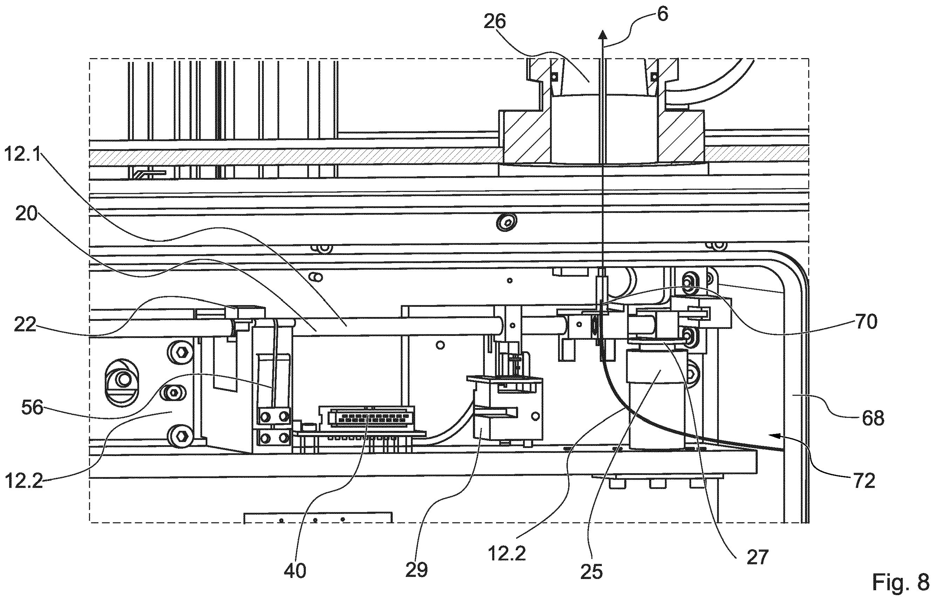

Alternativ ist es - wie in Figur 8 gezeigt - möglich, dass die Prozessgasleitung 12 von der Probenaufnahme nicht entlang des Wägebalkens 20 verläuft.

Die Prozessgasleitung wird in einem ersten Prozessgasleitungsanschluss 70 in Richtung der Probenaufnahme 8, die sich hier in dem Druckbehälter 26 befindet, weitergeführt. Ein zweiter Prozessgasleitungsanschluss 72 ist in dem Gehäuse 68 angeordnet und dazu eingerichtet, dass die Prozessgasleitung 12 von außerhalb des Gehäuses 68, beispielsweise von einem Druckgasbehälter, in die Waage 2 geführt wird.

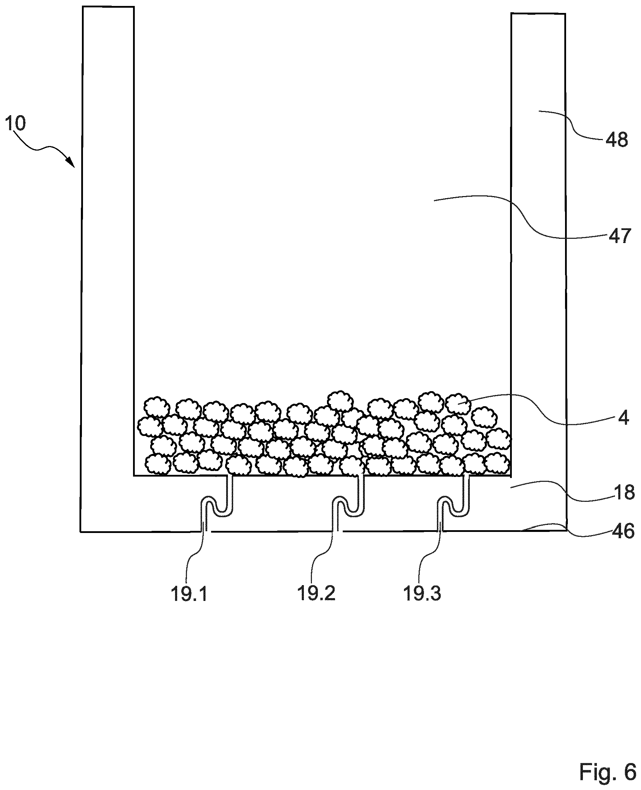

**Figur 6** zeigt einen erfindungsgemäßen Probenbehälter 10 mit Gaseintrittsöffnungen 19.1, ..., 19.3 im Probenbehälterboden 18 mit Siphonstruktur. Gezeigt sind drei beispielhafte Siphonstrukturen bei den drei gezeigten Gaseintrittsöffnungen 19.1, ..., 19.3. Die Siphonstruktur verhindert, dass die Probe 4, die sich im Probenbehälter-innenraum 47 befindet, durch die Gaseintrittsöffnungen 19.1, ..., 19.3 herausfällt. Andere Siphonstrukturen sind ebenfalls möglich.

Wie Figur 5 zeigt, hat die Waage eine Steuerung 40, die ausgebildet ist zum automati-schen Durchführen eines Verfahrens mit den Schritten (i) Erfassen eines Gewichts der Probe 4 zu zumindest einem Zeitpunkt t, (ii) Zuführen von Prozessgas 6 gemäß einem gespeicherten Prozessgasfluss-Schema, und (iii) Korrigieren des gemessenen Gewichts G anhand einer gespeicherten Funktion, die zumindest einem Prozessgasfluss einen Gewichtskorrekturwert zuordnet.

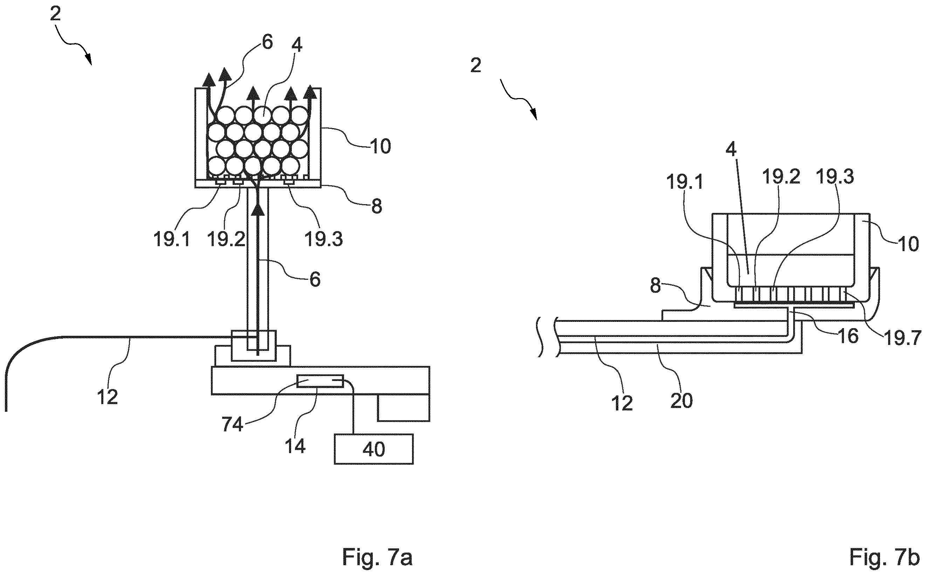

Figur 7a zeigt eine Waage 2 ohne Wägebalken, bei der die die Messeinheit 14 einen Dehnungsmessstreifen 74 aufweist, der mit der elektrischen Steuerung 40 verbunden ist.

Figur 7b zeigt einen Ausschnitt aus einer weitere Waage 2, bei der der Wägebalken 20 horizontal verläuft. Es ist nur der erste Leitungsabschnitt eingezeichnet. Die übrigen Komponenten sind die in Figur 1 gezeigten. Die Probe 4 befindet sich auf gleicher Höhe mit dem Wägebalken 20.

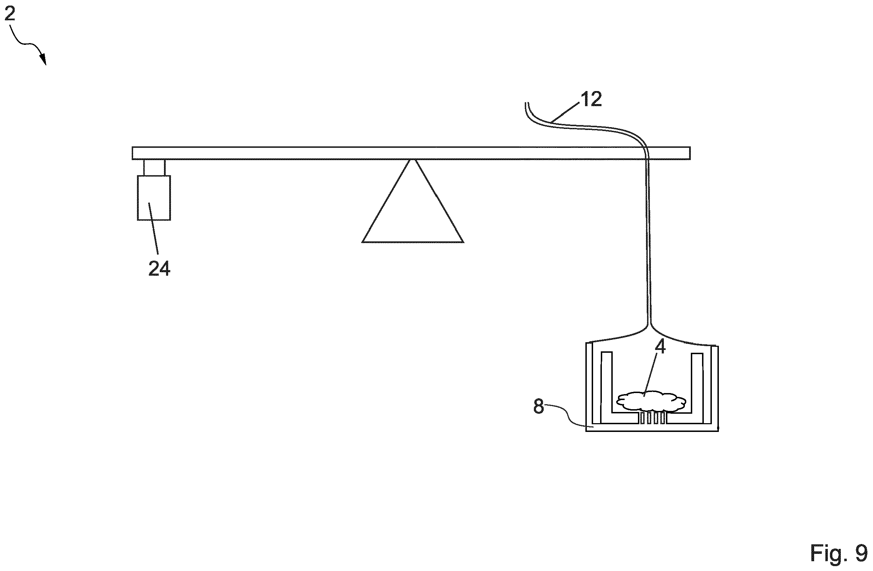

Figur 9 zeigt schematisch eine weitere Waage 2, bei der die Probenaufnahme 8 an der Prozessgasleitung 12 hängt. Die Prozessgasleitung 12 die Gewichtskraft der Probenaufnahme 8 und der Probe 4 auf.

### Bezugszeichenliste

| | | | |
|---|---|---|---|
| 2 | Waage | 36 | Prozessglasfluss-Steuerung |
| 4 | Probe | | |
| 6 | Prozessgas | 40 | Steuerung |
| 8 | Probenaufnahme | 46 | Standfläche des Probenbehälters |
| | | 47 | Probenbehälter-Innenraum |
| 10 | Probenbehälter | 48 | Deckel des Probenbehälters |
| 12 | Prozessgasleitung | 49. i | Reaktionsgasauslassöffnungen |
| 12.1 | erster Leitungsabschnitt | | |
| 12.2 | zweiter Leitungsabschnitt | 50 | Wägesystem |
| 14 | Messeinheit | 56 | Halterung (Spannband) |
| 16.i | Austrittsöffnungen | | |
| 18 | Probenbehälterboden | 60 | Spülgas |
| 19 | Gaseintrittsöffnung | 61 | Spülgasvorrichtung |
| | | 68 | Gehäuse |
| 20 | Wägebalken | | |
| 22 | Wägebalken-Drehpunkt | 70 | erster Prozessgaslei- |
| 24 | Austariereinheit | | tungsanschluss |
| 25 | Dauermagneten | 72 | zweiter Prozessgasleitungs- |
| 26 | Druckbehälter | | anschluss |
| 27 | Spule | 74 | Dehnungsmessstreifen |
| 28 | Heizelement | | |
| 29 | Positionssensor | A | axiale Richtung |
| | | Iₖ | Kompensationsstrom |
| 30 | Gas-Temperiervorrichtung | N | Zahl der Austrittsöffnungen |
| 32 | Temperatursensor | R | radiale Richtung |
| | | G | Gewichtskraftrichtung |

## Patentansprüche

1. Waage (2) zum Wägen einer Probe (4) unter Wechselwirkung mit mindestens einem Prozessgas (6), wobei die Waage (2)
(a) zumindest eine Probenaufnahme (8), die eingerichtet ist zum Aufnehmen einer Gewichtskraft eines Probenbehälters (10) mit der Probe (4),
(b) mindestens eine Prozessgasleitung (12), die ausgebildet ist zum Zuführen des Prozessgases (6) zur Probenaufnahme (8), und
(c) mindestens eine Messeinheit (14) zum Messen der Gewichtskraft oder einer Gewichtskraftänderung, die auf die Probenaufnahme (8) einwirkt, aufweist, **dadurch gekennzeichnet, dass**
(d) die Probenaufnahme (8) mindestens eine Austrittsöffnung (16) für das Prozessgas (6) hat, die angeordnet ist zum Leiten des Prozessgases (6) zu einem Probenbehälterboden (18).

2. Waage (2) nach Anspruch 1, **dadurch gekennzeichnet, dass**
(a) die Waage (2) einen Wägebalken (20) aufweist, der in einem Wägebalken-Drehpunkt (22) gelagert ist,
(b) die Probenaufnahme (8) mittels des Wägebalkens (20) mit der Messeinheit (14) verbunden ist, sodass mittels der Messeinheit (14) eine Gewichtskraft und/oder Gewichtskraftänderung der Probe (4) messbar ist,
(c) die Waage (2) eine Austariereinheit (24) zum Austarieren einer auf die Probenaufnahme (8) wirkenden Gewichtskraft aufweist und
(d) die Prozessgasleitung (12)
(i) einen ersten Leitungsabschnitt (12.1) hat,
der von dem Wägebalken-Drehpunkt (22) des Wägebalkens (20) zur Probenaufnahme (8) verläuft und
in dem die Prozessgasleitung (12) zumindest abschnittsweise entlang des Wägebalkens (20) verläuft, und
(ii) einen zweiten Leitungsabschnitt (12.2) hat,
der vom Wägebalken-Drehpunkt (22) weg verläuft und
in dem die Prozessgasleitung (12) nicht mit dem Wägebalken (20) verbunden ist.

3. Waage (2) nach Anspruch 2, **dadurch gekennzeichnet, dass** die Prozessgasleitung (12) im ersten Leitungsabschnitt (12.1) zumindest abschnittsweise mit dem Wägebalken (20) verbunden oder in oder an ihm ausgebildet ist.

4. Waage (2) nach einem der Ansprüche 2 oder 3, **dadurch gekennzeichnet, dass** die Prozessgasleitung (12) im Bereich des Wägebalken-Drehpunkts (22) zumindest abschnittsweise in axialer Richtung (A) vom Wägebalken (20) weg verläuft.

5. Waage (2) nach Anspruch 1, **dadurch gekennzeichnet, dass** die Probenaufnahme (8) an der Prozessgasleitung (12) hängt.

6. Waage (2) nach einem der vorstehenden Ansprüche, **gekennzeichnet durch**
(a) einen Druckbehälter (26), der die Probenaufnahme (8) umgibt, sodass der Probenbehälter (10) unter einen vom Umgebungsdruck abweichenden Prozessdruck bringbar ist, und/oder
(b) mindestens ein Heizelement (28) zum Erhitzen der Probe (4) und/oder
(c) mindestens eine Gas-Temperiervorrichtung (30) zum Temperieren des Prozessgases (6) an der mindestens einen Austrittsöffnung (16) auf eine vorgegebene Temperatur, und/oder
(d) mindestens einen Temperatursensor (32) zum Erfassen einer Temperatur der Probe (4) und/oder des Prozessgases (6), und/oder
(e) ein Kalorimeter (34) zum Erfassen einer abgegebenen und/oder aufgenommenen Wärmemenge bei der Wechselwirkung der Probe (4) mit dem Prozessgas (6) und/oder
(f) eine Prozessgasfluss-Steuerung (36) zum Steuern eines Prozessgasflusses.

7. Waage (2) nach einem der vorstehenden Ansprüche, **gekennzeichnet durch** eine Steuerung (40), die ausgebildet ist zum automatischen Durchführen eines Verfahrens mit den Schritten
(i) Erfassen eines Gewichts der Probe (4) zu zumindest einem Zeitpunkt,
(ii) Zuführen von Prozessgas (6) gemäß einem gespeicherten Prozessgasfluss-Schema, und
(iii) Korrigieren des gemessenen Gewichts anhand einer gespeicherten Funktion, die zumindest einem Prozessgasfluss einen Gewichtskorrekturwert zuordnet.

8. Probenbehälter (10), insbesondere Tiegel, der
(a) einen Probenbehälterboden (18) mit zumindest einer Gaseintrittsöffnung (19) aufweist und
(b) ausgebildet ist zum Bilden einer gasstromdichten Verbindung mit einer, insbesondere ebenen, Probenaufnahme (8).

9. Probenbehälter (10) nach Anspruch 88, **dadurch gekennzeichnet, dass**
(a) der Probenbehälterboden (18) aus Metall, Keramik oder Glas, insbesondere Quarzglas, besteht und/oder
(b) der Probenbehälterboden (18) eine Standfläche (46) hat, mit der der Probenbehälter (10) auf einer ebenen Fläche steht, wobei die Standfläche (46) eine Ebenheitsabweichung von maximal 50 µm, insbesondere maximal 10 µm hat. [Ist das so korrekt? Bitte gegebenenfalls ändern.] und/oder
(c) der Probenbehälter (10) einen Deckel (48) aufweist, der zumindest zwei Reaktionsgasauslassöffnungen (49.i) zum Ausströmenlassen von Gas aus einem Probenbehälter-Innenraum (47) in radial auswärtige Richtung (R) besitzt.

10. Probenbehälter (10) nach Anspruch 8 oder 9, **dadurch gekennzeichnet, dass** die Gaseintrittsöffnung (19) im Probenbehälterboden (18) eine Siphonstruktur aufweist, die mit der Gaseintrittsöffnung (19) verbunden ist und in einen Probenbehälter-Innenraum (47) führt.

11. Wägesystem (50) mit
(a) einer Waage (2) nach einem der Ansprüche 1 bis 7 und
(b) einem Probenbehälter (10) nach einem der Ansprüche 8 bis 10,
(c) wobei die Probenaufnahme (8) und der Probenbehälter (10) so ausgebildet sind, dass der Probenbehälter (10) in einer Kontaktposition auf der Probenaufnahme (8) positionierbar ist, in der aus der mindestens einen Austrittsöffnung (16) austretendes Prozessgas (6) durch die Gaseintrittsöffnungen (19.i) in den Probenbehälter (10) einströmt, sodass eine im Probenbehälter (10) enthaltene Probe (4) vom Prozessgas (6) durchströmt wird.
